# EUROPEAN PATENT APPLICATION

(11) **EP 1 736 053 A1**
(43) Date of publication of application: **27.12.2006**
(21) Application number: 05727792.3
(22) Date of filing: 29.03.2005
(51) Int. Cl.: A01N 63/02, A01C 1/00, A01G 1/00, A01G 7/00, A01N 25/00, A01N 43/90

(54) **PLANT GERMINATION INHIBITOR AND METHOD OF USE THEREOF**

(30) Priority: 29.03.2004 JP 2004097250
(71) Applicant: Fukuoka Women's University, Higashi-ku Fukuoka-shi, Fukuoka 813-8529 (JP); Miyauchi, Shinnosuke, Niigata-shi Niigata 9502055 (JP); Nakamura Sangyo Gakuen, Fukuoka-shi Fukuoka 8138503 (JP)
(72) Inventor: MIYAUCHI, Shinnosuke, 9502055 (JP); SHIBATA, Masao, Tosu-shi, Saga 8410052 (JP); SAKAKI, Tsuyoshi, Tosu-shi, Saga 8410052 (JP); WAKAMATSU, Kunimitsu, 8113221 (JP); MUKAE, Katsuya, Fukuoka-shi, Fukuoka 8110211 (JP)
(74) Representative: Rogers, Alex Lee
(86) International application number: PCT/JP2005/005901
(87) International publication number: WO 2005/092107

(57) **Abstract**

A novel plant germination inhibitor that without any hazardous effects on cultivated crop and without the danger of environmental pollution, can exert high efficacy with an extremely small dosage. There is provided a plant germination inhibitor comprising as an active ingredient a pigment produced in woody parts by fungi of the chlorosplenium aeruginosum genus or a pigment contained in cells of fungi of the chlorosplenium aeruginosum genus. Through the application of this plant germination inhibitor to a plant growth area during the germination period of the plant, the germination of the plant can be inhibited and the formation of rootstock tissue can be inhibited to thereby enable control of plant tissue formation.

## Description

### Technical Field

The present invention relates to a novel plant germination inhibitor, as well as a method for controlling plant growth, a method for controlling selective growth, and a method for lawn management using the nevel plant germination inhibitor.

### Background Art

It is known for a long time that treatments such as irradiation with radiation and cooling are performed to allow long-term storage by suppressing germination and growth of plant bulb, tuber, seedling, and the like. It has also been performed to treat with a chemical for suppression of germination and growth.

For example, a method for suppressing germination by application of an imidazolinone pesticide to cultivated crops (JP6-157210A), a seed germination inhibitor having fatty acids of 12 to 22 carbon atoms as the active components (JP6-345606A), a germination inhibitor containing medium- or long-chain alcohols, ethereal oil, and rapeseed oil methyl ester (JP8-500367A), a germination or growth inhibitor comprising brassinosteroids produced by a microorganism belonging to the genus *Drechslera* (JP7-69987A), a germination inhibitor consisting of zeolite powder and a liquid alcohol enclosed in a water-impermeable but air-permeable capsule (JP8-40806A), a method for suppressing germination by immersing plant seeds in a solution of epigallocatechin gallate (JP10-178817A), a weed germination inhibitor in which dry-distilled liquid of plants having an inhibitory effect on weed germination is added to an inorganic mineral with an oil absorption of 100 ml/100 g or more (JP2000-86418A), an aqueous composition having an effect of germination inhibition in which a plant oil having a surface activity is added to Hiba-oil (JP2000-290119A), a plant stimulator having an effect of germination inhibition in which oligosaccharides and plant extract components are admixed with vinegar (JP2001-64112A), a germination inhibitor of crop plants containing styrene derivatives or terpenes as the active components that are both obtained from extracts of rice hulls or seed husks of wheat variety (JP2002-255707A and JP2002-255710A), a germination inhibitor of crop plants having diacetone alcohol as the active component (JP2002-255708A), and the like have been proposed so far.

As to cultivated crops offered as foods including grain crops such as rice, wheat, corn, and soybean, vegetables such as spinach, komatsuna, daikon radish, turnip, cabbage, and Chinese cabbage, and the like, the development of a germination inhibitor that gives as little biological hazard as possible to cultivated crops is desired because there are fears of environmental pollution and hazardous effects on human body.

### Disclosure of the Invention

Under these circumstances, the present invention was accomplished with the object of providing a novel germination inhibitor that has no hazardous effects on cultivated crops, would cause no danger of environmental pollution, and further can exert high efficacy with an extremely small dose.

The present inventors previously found that a coloring matter produced by a fungus belonging to the genus *Chlorociboria* that develops on a fallen broadleaf tree, rots it, and causes blue green coloring exerts a growth suppression effect on algae and proposed a plant growth inhibitor with this coloring matter as the effective ingredient. As a result of a series of further studies, the present inventors found that this coloring matter has an excellent effect of germination inhibition on numerous plants. The present invention has been accomplished based on this finding.

That is, the present invention provides a plant germination inhibitor that has a coloring matter produced in woody parts by a fungus belonging to the genus *Chlorociboria* or the coloring matter contained in the fungus body of the fungus belonging to the genus *Chlorociboria* as an effective ingredient, a method for controlling formation of tissues of a plant characterized in that the plant germination inhibitor is, during the germination period of the plant, distributed over the area where the plant grows so as to suppress germination of the plant and to inhibit formation of the rootstalk tissues, and a method for plant cultivation characterized in that the plant germination inhibitor is distributed over a symbiotic area of at least two kinds of plants so as to selectively inhibit formation of rootstalk tissues of the plants other than the desired cultivated plants by utilizing the difference in the germinating conditions among the respective plants.

Next, the present invention will be described in detail.

The effective ingredient of the plant germination inhibitor of the present invention is a coloring matter produced in woody parts by a fungus belonging to the genus *Chlorociboria* or the coloring matter contained in the fungus body. The coloring matter can be obtained by extraction and separation with water, an organic solvent, a mixed solution of water and organic solvent, or the like from the woody parts, preferably by pressurized hot water extraction and separation.

Alternatively, the fungus of the genus *Chlorociboria* is cultured according to a culture method using a conventionally known liquid culture medium or a culture method using sawdust impregnated with a liquid culture medium, and the produced coloring matter is extracted from culture medium components with water, an organic solvent, or a mixed solution of water and organic solvent and can be obtained either by evaporating volatile components such as water, the organic solvent, or the mixed solution of water and organic solvent or by selectively using an appropriate separation column and adsorbing the coloring matter onto the separation column.

This fungus belonging to the genus *Chlorociboria* includes, for example, *Chlorociboria aeruginosa, Chlorociboria aeruginascens, Chlorociboria omnivirens,* and the like.

The above pressurized hot water extraction and separation is carried out by using woody parts containing the coloring matter produced by a fungus of the genus *Chlorociboria* or by using the fungus itself of the genus *Chlorociboria* as a raw material, extracting this material being preferably in a powder form with hot water either in a gas or liquid state, removing rotten components and readily soluble components, and then selectively extracting and separating the coloring matter with pressurized hot water, preferably pressurized hot water added with an alkali. Further, if necessary, an acid is added to the aqueous solution of the coloring matter obtained in the above treatment to purify the coloring matter by precipitation and separation treatment.

In order to carry out this pressurized hot water extraction and separation appropriately, a properly pulverized raw material of the woody parts or a raw material of the fungus body containing the coloring matter is filled in an extraction vessel covered with meshes and the like so as to prevent the raw material from flowing out, and then, rotten components or readily soluble components originating from the fungus body of a fungus of the genus *Chlorociboria* are first extracted and removed by allowing the raw material to come in contact with hot water of 100 to 140 °C, preferably 120 to 135 °C, under open pressure. At the time of this treatment, when hot water above 140 °C is used, there is a disadvantage that the coloring matter may be decomposed, and when hot water below 100°C is used, efficient extraction can not be performed due to lowering of the dissolving power of hot water. This treatment is completed when color of the extracted solution has become colorless.

Subsequently, further extraction is carried out for the extracted residue remaining in the extraction vessel by adding pressurized hot water at a temperature above 100 °C, preferably at 120 to 135 °C. The pressure applied at this time is set to the vapor pressure or higher, preferably approximately from 0.5 to 2 MPa so that the hot water may completely change to a liquid state. The hardly soluble coloring matter is extracted by this pressurized hot water, and its extraction speed can be greatly enhanced by adding a small amount of an alkali, for example, an alkaline metal hydroxide such as sodium hydroxide or potassium hydroxide or an alkaline earth metal hydroxide such as magnesium hydroxide or calcium hydroxide.

For the addition amount of such an alkaline metal hydroxide or an alkaline earth metal hydroxide, a range in which the alkali concentration in the pressurized hot water lies between 0.001 and 0.1 N (normality) is chosen. When this alkali concentration exceeds 0.1 N, components that should be excluded as residues such as hemicellulose are also extracted and the purity of the useful coloring matter is lowered, and when the concentration is lower than 0.001 N, its addition effect is not enough, and sufficient enhancement of the extraction speed can not be achieved.

An aqueous solution of the coloring matter is obtained by this pressurized hot water extraction treatment, and then this aqueous solution is adjusted to pH 3 or lower by adding an acid to precipitate the coloring matter. The coloring matter precipitated in this way is recovered by a conventional filtration or centrifugation method and dried to yield the desired coloring matter as solid powder.

The color of this coloring matter changes from blue to purple by ultraviolet or visible light irradiation, and the effect of plant germination inhibition is enhanced with the color change.

Since the least requirement of the plant germination inhibitor of the present invention is that the coloring matter is contained as the effective ingredient, the form when the coloring matter is used may be the fungus body itself of a fungus of the genus *Chlorociboria,* a culture medium after the fungus of the genus *Chlorociboria* was cultured, for example, the liquid culture medium, raw wood on which the fungus of the genus *Chlorociboria* has been grown, or woody material obtained by processing the raw wood into an appropriate shape by chipping, cutting, crushing, and the like, for example, sawdust.

The plant germination inhibitor of the present invention is applied at a rate of from 0.001 to 2 kg/ha, preferably from 0.005 to 1.0 kg/ha, and particularly preferably from 0.01 to 0.5 kg/ha based on the above effective ingredient. This application is desirably carried out by spraying as a liquid formulation or a powder formulation.

The plant germination inhibitor of the present invention is usually prepared as a composition containing the coloring matter at 0.01 to 99% by mass, preferably at 0.5 to 85% by mass, and particularly preferably at 10 to 50% by mass after allowing the coloring matter to be supported by an appropriate carrier and adding a surfactant as needed. At the time of application, the preparation is diluted so that the content of the active ingredient may become 0.001 to 5% by mass depending on its application area.

As the above carrier, either liquid carrier or solid carrier can be used. Examples of the liquid carrier include water, alcohols (e.g. methanol, ethanol, 2-methoxyethanol, isopropanol, propylene glycol, and diethylene glycol), ketones (e.g. acetone and methyl ethyl ketone), hydrocarbons (e.g. benzene, toluene, xylene, cyclohexane, and methylnaphthalene), esters (e.g. ethyl acetate and butyl acetate), ethers (e.g. dioxane, diisopropyl ether, and diethylene glycol monoethyl ether), acid amides (e.g. methylformamide, dimethylformamide, and dimethylacetoamide), and the like.

Examples of the solid carrier include fine powders or particles of clays (e.g. kaolinite, acid clay, diatom earth, synthetic hydrated silicon dioxide, and bentonite), talcs, other inorganic minerals (e.g. mica, chalk, attapulgite, meerschaum, pearlite, calcium carbonate, quartz powder, activated charcoal, silica, and hydrated silica), silicates, lignosulfonates, chemical fertilizers (e.g. ammonium sulfate, ammonium chloride, ammonium phosphate, and urea), organic substances (e.g. sugarcane, bark powder, and tobacco stalk powder), and the like.

These carriers may be either of natural origin or synthetic origin, or modified natural materials.

Wettable powder that is used by scattering on or dispersing in water can be prepared by mixing the coloring matter in a particulate form with a particulate carrier or by spraying the coloring matter dissolved or dispersed in a liquid on a particulate carrier and then mixing with a wetting agent and a dispersing agent, followed by pulverization of the mixture. A composition for aerosol can be prepared by mixing the coloring matter with a propellant, for example, a polyhalogenated alkane such as dichlorofluoromethane, or with a solvent in some cases.

The surfactant used as needed may be any one of an anionic surfactant, cationic surfactant, and nonionic surfactant. As the anionic surfactant, a mono- or diester of phosphoric acid with an aliphatic alcohol ethoxylate or a salt of such an ester, an aliphatic alcohol sulfate such as sodium dodecyl sulfate, an ethoxylated aliphatic alcohol sulfate, an ethoxylated alkylphenol sulfate, a lignin sulfate, a petroleum sulfonate, an alkylaryl sulfonate such as alkylbenzene sulfonate or lower alkyl naphthalene sulfonate, a salt of sulfonated naphthalene formaldehyde condensates, a salt of sulfonated phenol formaldehyde condensates, a more complicated sulfonate such as amidosulfonate, e.g. a sulfonated condensation product of oleic acid and N-methyltaurine, a dialkylsulfosuccinate such as sodium sulfonate of dioctyl succinate, or the like is used.

As the nonionic surfactant, for example, an aliphatic ester, an aliphatic alcohol, an aliphatic amide, a condensation product of alkyl-substituted phenol and ethylene oxide, a fatty acid ester of polyhydric alcohol ether such as sorbitan fatty acid ester or a condensation product of such an ester with ethylene oxide, e.g. polyoxyethylene sorbitan fatty acid ester, a block copolymer of ethylene oxide and propylene oxide, an acetylenic glycol such as 2,4,7,9-tetramethyl-5-decyne-4,7-diol, an ethoxylated acetylenic glycol, or the like is used.

As the cationic surfactant, for example, an alkyl- and/or aryl-substituted quaternary ammonium compound such as cetyltrimethylammonium bromide, an ethoxylated tertiary aliphatic amine, or the like is used.

A preferred surfactant is an ethoxylated aliphatic alcohol sulfate, a lignin sulfonate, an alkylaryl sulfonate, a salt of sulfonated naphthalene formaldehyde condensates, a salt of sulfonated phenol formaldehyde condensates, sodium oleoyl-N-methyltauride, a dialkylsulfosuccinate, an alkylphenol ethoxylate, an aliphatic alkyl ethoxylate, or the like.

The plant germination inhibitor of the present invention can be prepared in a form such as emulsion, wettable powder, suspension, dry flowable, flowable, fumigant, aerosol, or microcapsule similar to conventional agricultural chemicals.

At this time, auxiliary agents such as sticking agent, dispersant, and stabilizer can be admixed, and these auxiliary agents include, for example, casein, gelatin, polysaccharides (e.g. starch, gum Arabic, and cellulose derivatives), lignin derivatives, bentonite, saccharides, water-soluble synthetic polymers (e.g. polyvinyl alcohol, polyvinylpyrrolidone, and polyacrylic acids), PAP (acidic isopropyl phosphate), BHT (2,6-di-t-butyl-4-methylphenol), vegetable oils, mineral oils, fatty acids or esters thereof, and the like.

The plant germination inhibitor of the present invention can be widely applied to any plants such as monocotyledonous plants, dicotyledonous plants, and gymnospermous plants. As the usage of the plant germination inhibitor, it is suitable for storage of plant seeds and subterranean stem plants, and particularly suitable for prevention of decrease in commercial value that is caused by germination of plant seeds for cultivation and germination of seeds and underground stems of vegetables and fruits to be sold in shops during storage or transport.

Plants to which the plant germination inhibitor of the present invention can be applied include, for example, daikon radish, turnip, carrot, onion, edible burdock, yam, Welsh onion, Chinese chive, spinach, Garland chrysanthemum, komatsuna, broccoli, cabbage, Chinese cabbage, Japanese parsley, Japanese honewort, parsley, shiso, celery, qing geng cai, bao xin jie (Chinese vegetable), *Brassica chinensis* var. *rosularis, Brassica juncea* var. *crispifolia, Brassica rapa* var. *purpuraria, Brassica chinensis* var. *oleifera,* tomato, bell pepper, egg plant, sweet pepper, red pepper, pumpkin, cucumber, wax gourd, broad bean, bean sprout, field pea, kidney bean, green soybean, soybean, adzuki bean, peanut, sesame, buckwheat, rice, wheat, barley, corn, sugarcane, walnut, chestnut, ginkgo nut, persimmon, loquat, pear, grape, mandarin orange, watermelon, lemon, *Citrus natsudaidai,* apricot, papaya, jujube, blue berry, olive, and the like. In particular, the plant germination inhibitor is desirably applied at the time of distributing seeds of these plants.

Besides, the plant germination inhibitor can also be applied to lotus root, sweet potato, potato, taro, garlic, ginger, shallot, *Zingiber mioga,* bamboo shoot, elephant foot, and the like.

When the plant germination inhibitor of the present invention is applied, seeds or underground stems of the above-listed plants are immersed in water, an organic solvent, or a solution of water and organic solvent that contains the plant germination inhibitor. Alternatively, the aqueous solution is applied or sprayed onto the seeds or the underground stems of the plants.

The plant germination inhibitor of the present invention can be used as being distributed over a plant growth area to inhibit germination of various plants developing there to prevent any disadvantage that may occur due to the growth of the plants. For example, the inhibitor can prevent development of weeds such as *Cyperus microiria* and bamboo at tile joints of paved sidewalks, concrete wall surfaces, and the like to bring about the strength reduction or to spoil of the appearance.

Next, the plant germination inhibitor of the present invention can be used to selectively inhibit formation of rootstalk tissues of plants other than the desired cultivated plant by distributing same over a symbiotic area of at least two kinds of plants and utilizing the difference in the germinating conditions among the respective plants.

As the plants in the above case, there are monocotyledonous plants, dicotyledonous plants, and gymnospermous plants. Examples of the monocotyledonous plants include plants of the family Poaceae such as *Miscanthus sinensis, Isachne globosa, Eragrostis cilianensis, Phalaris arundinacea, Poa sphondylodes, Agrostis alba, Deschampsia flexuosa, Glyceria ischyroneura, Muhlenbergia japonica, Hakonechloa macro, Digitaria ciliaris, Hemarthria sibirica, Arthraxon hispidus, Lophatherum gracile, Calamagrostis arundinacea* var. *brachytricha, Paspalum thunbergii, Panicum bisulcatum, Zoysia japonica, Microstegium japonicum, Melica nutans, Anthoxanthum odoratum, Sacciolepis indica* var. *oryzetorum, Imperata cylindrica, Pennisetum alopeculoides, Alopecurus aequalis* var. *amurensis, Polypogon fugax, Setaria virides, Setaria glauca, Olismenus undulatifolius* var. *undulatifolius, Poa annua, Cymbopogon tortilis* var. *goeringii,* and *Beckmannia syzigachne;* and plants of the family Cyperaceae such as, *Cyperus microiria, Lipocarpha microcephala, Scirpus yagara, Carex* spp., *Schoenus apogon, Scirpus hotarui, Scirpus wichurae,* and *Carex morrowii* Boott.

In addition, the plant germination inhibitor of the present invention can also be applied to plants of the family Orchidaceae, plants of the family Juncaceae, plants of the family Arecaceae such as coconut palm, *Borassus flabellifer,* oil palm, palm (*Trachycarpus fortunei),* and mangrove palm, plants of the subfamily Bambusioideae such as *Phyllostachys pupescens, Phyllostachys heterocycla f. heterocycla, Phyllostachys bambusoides, Phyllostachys bambusoides f. castilonis, Phyllostachys nigra* var. *henonis, Phyllostachys aurea, Semiarundinaria fastuosa, Sinobambusa tootsik,* and *Tetragonocalamus quadrangularis,* and the like, but applicable plants are not limited to these listed.

The dicotyledonous plants are subdivided to class *Dicotyledonae* subclass *Archichlamydeae* and class *Dicotyledonae* subclass *Metachlamydeae* and include, for example, plants of the family Ulticaceae such as *Boehmeria tricuspis, Urtica thunbergiana, Elatostema umbellatum* var. *majus,* and *Pilea mongolica,* plants of the family *Caryophyllaceae* such as *Dianthus barbatus* and *Dianthus superbus* var. *longicalycinus,* plants of the family Polygonaceae such as *Pericardia pilosa, Polygonum tinctorium, Persicaria conspicua, Persicaria longiseta, Persicaria pubescens, Persicaria aestiva, Rumex acetosa, Persicaria senticosa, Fagopyrum esculentum, Rheum palmatum,* and *Polygonum tinctorium,* plants of the family Ranunculaceae such as *Aconitum carmichaelii, Aconitum chinense, Aconitum senanense, Aconitum sanyoense, Aconitum japonicum* var. *montanum, Ranunculus japonicus, Ranunculus extorris, Ranunculus silerifolius,* and *Ranunculus sceleratus,* plants of the family Rosaceae such as *Sanguisorba officinalis, Filipendula multijuga, Aruncus dioicus* var. *tenuifolius, Stephanandra incisa,* rose, strawberry, apple, and pear, plants of the family Leguminosae such as *Vicia angusutifolia, Vicia hirsuta, Amphicarpaea bracteata* subsp. *edgeworthii,* and *Kummerowia striata,* plants of the subfamily Mimosaceae, plants of the subfamily Caesalpiniaceae, plants of the subfamily Fabaceae, plants of the family Saxifragaceae such as *Saxifraga stolonifera, Parnassia foliosa* var. *nummularia, Cardiandra alternifolia, Tiarella polyphylla,* and *Saxifraga fortunei* var. *incisolobata,* plants of the family Papaveraceae such as *Pteridophyllum racemosum, Corydalis decumbens, Macleaya cordata, Chelidonium majus* var. *asiaticum, Hylomecon japonica, Arabis flagellosa,* and *Raphanus sativus* var. *raphanistroides,* plants of the family Cruciferae such as rapeseed, *Capsella bursa-pastoris, Arabis stelleri* var. *japonica,* and *Raphanus sativus* var. *raphanistroides,* plants of the family Violaceae, plants of the family Onagraceae such as *Epilobium pyrricholophum, Oenothera tetraptera, Circaea mollis, Chamaenerion angustifolium,* and *Ludwigia epilobioides,* plants of the family Euphorbiaceae, plants of the family Polygalaceae, plants of the family Aristolochiaceae, plants of the family Umbelliferae, plants of the family Balsaminaceae, plants of the family Cucurbitaceae, plants of the family Crassulaceae, plants of the family Guttiferae, plants of the family Phytolaccaceae, plants of the family Berberidaceae, plants of the family Malvaceae, plants of the family Araliaceae, plants of the family Primulaceae, plants of the family Gentianaceae, plants of the family Rubiaceae such as *Rubia argyi, Pseudopyxis depressa, Galium spurium* var. *echinospermon,* and *Hedyotis diffusa,* plants of the family Lamiaceae, plants of the family Acanthaceae, plants of the family Boraginaceae, plants of the family Scrophulariaceae, plants of the family Campanulaceae, plants of the family Asteraceae such as *Cirsium* spp., *Ixeris dentata, Youngia japonica, Eupatorium japonicum,* dandelion, *Saussurea* spp., *Carpesium abrotanoides, Eupatorium makinoi, Solidago altissima, Artemisia princeps, Galinsoga ciliata, Conyza japonica, Centipeda minima, Atractylodes japonica, Ixeris chinensis* subsp. *strigosa, Lactuca indica, Aster yomena, Achillea alpina, Aster scaber, Inula salicina* var. *asiatica, Lapsana apogonoides, Adenostemma lavenia, Aster rugulosus, Inula ciliaris, Aster arenarius, Chrysanthemum pacificum, Senecio pierotii, Inula britannica* subsp. *japonica, Ligularia fischeri, Crepidiastrum platyphyllum,* and *Farfugium japonicum,* plants of the family Asclepiadaceae such as *Metaplexis japonica, Cynanchum ascyrifolium, Cynanchum caudatum,* and *Cynanchum paniculatum,* plants of the family Valerianaceae, plants of the family Pyrolaceae, plants of the family Dipsacaceae, plants of the family Liliaceae, plants of the family Iridaceae, plants of the family Salicaceae such as plants of the subfamilies Salicoideae and Populoides, plants of the family Fagaceae such as *Fagus crenata, Quercus serrata, Quercus dentata,* and *Quercus* sp., plants of the family Betulaceae, plants of the family Ulmaceae, plants of the family Moraceae, plants of the family Magnotiaceae, plants of the family, Lauraceae, plants of the family Rosaceae, plants of the family Leguminosae, plants of the family Platanaceae, plants of the family Saxifragaceae, plants of the family Hamamelidaceae, plants of the family Aceraceae, plants of the family Sapindaceae, plants of the family Anacardiceae, plants of the family Sabiaceae, plants of the family Hippocastanaceae, plants of the family Celastraceae, plants of the family Buxaceae, plants of the family Aquifoliaceae, plants of the family Araliaceae, plants of the family Cornaceae, plants of the family Loranthaceae, plants of the family Aucubaceae, plants of the family Ericaceae, plants of the family Theaceae, plants of the family Myrtaceae, plants of the family Rhizophoraceae, plants of the family Combretaceae, plants of the family Juglandaceae, plants of the family Elaeagnaceae, plants of the family Thymelaeaceae, plants of the family Euphorbiaceae, plants of the family Daphniphyllaceae, plants of the family Rhamnaceae, plants of the family Myricaceae, plants of the family Eupteleaceae, plants of the family Trochodendraceae, plants of the family Santalaceae, plants of the family Flacourtiaceae, plants of the family Tamaricaceae, plants of the family Stachyuraceae, plants of the family Oleaceae, plants of the family Styracaceae, plants of the family Myrsinaceae, plants of the family Caprifoliaceae, plants of the family Boraginaceae, plants of the family Solanaceae, plants of the family Scrophulariaceae, plants of the family Rubiaceae, plants of the family Verbenaceae, plants of the family Diapensiaceae, and the like, but are not limited to these listed.

The gymnospermous plants include plants of the family Pinaceae, plants of the family Taxodiaceae, plants of the family Podocarpaceae, plants of the family Taxaceae, and the like, but are not limited to these listed.

The plant germination inhibitor of the present invention can also be used to remove weeds other than the cultivated crop in an area where the crop is cultivated, and such a cultivated crop includes monocotyledonous plants such as rice, wheat, barley, corn, sugarcane, onion, yam, Welsh onion, Chinese chive, taro, garlic, ginger, shallot, lily, and *Zingiber mioga* and dicotyledonous plants such as daikon radish, turnip, carrot, edible burdock, spinach, Garland chrysanthemum, komatsuna, broccoli, cabbage, Chinese cabbage, Japanese parsley, Japanese honewort, parsley, shiso, celery, qing geng cai, bao xin jie (Chinese vegetable), *Brassica chinensis* var. *rosularis, Brassica juncea* var. *crispifolia, Brassica rapa* var. *purpuraria, Brassica chinensis* var. *oleifera,* tomato, bell pepper, egg plant, sweet pepper, red pepper, pumpkin, cucumber, wax gourd, broad bean, bean sprout, field pea, kidney bean, green soybean, soybean, adzuki bean, peanut, sesame, buckwheat, lotus root, sugarcane, and potato. However, insofar as plants are used as cultivated crops, they are not limited to those listed above.

On the other hand, examples of weeds are monocotyledonous plants and dicotyledonous plants other than the above.

When the plant germination inhibitor of the present invention is applied to these uses, an aqueous preparation or powder preparation containing this plant germination inhibitor is sprinkled or sprayed over a symbiotic area or cultivated area at a specified concentration. Alternatively, the plant germination inhibitor may be permeated into the soil of an area to be cultivated in advance.

Further, the plant germination inhibitor of the present invention can be used for lawn management.

In this case, for lawn such as that on a golf course, care must be taken to keep the length of leaves of a lawngrass uniform by mowing frequently the lawngrass growing in summer since lawngrass has an ability to grow vigorously. Further, an herbicide must be distributed to remove weeds occurring in lawn, and usually a harmful compound is used for this herbicide, which causes environmental pollution and is becoming a social problem.

However, when the plant germination inhibitor of the present invention is used, not only is excessive growth of a lawngrass suppressed but also development of weeds other than the lawngrass can be inhibited, thereby allowing the lawn to be managed efficiently.

Furthermore, when bonsai tree of gymnospermous plant such as pine is grown, germination is prevented for over an extended period of time and a desired tree shape can be made by applying the plant germination inhibitor of the present invention to a cut end of the tree branch, by distributing the plant germination inhibitor of the present invention over the ground surface, or by allowing the plant germination inhibitor of the present invention to be present in the ground in any form.

It should be noted that even once treatment of germination inhibition has been performed by applying the plant germination inhibitor of the present invention to a plant, the plant can be germinated again likewise as to the untreated plant by removing the plant germination inhibitor.

### Brief Description of the Drawings

Figure 1 is a schematic diagram showing germination states of daikon radish sprouts from seeds impregnated with different concentrations of a coloring matter and seeds not impregnated with the coloring matter;
Figure 2 is a graph showing a relation of the shoot lengths averaged for 14 or 7 seeds and 2 or 1 control seed to concentrations of the coloring matter in Examples 1 and 2; and
Figure 3 is a schematic diagram showing germination states of rice seeds impregnated with different concentrations of the coloring matter and rice seeds not impregnated with the coloring matter.

### Best Mode for Carrying Out the Invention

Next, the best mode for carrying out the present invention will be explained by way of examples, but the present invention is not limited at all by these examples.

### Reference Example 1

Woody materials containing a coloring matter produced by a *Chlorociboria aeruginosa* were crushed to prepare a sample, and 7 g of this sample was put in an extraction part of which both ends were capped with sintered filters so that the sample might not flow out. After allowing hot water of 130°C to flow through the sample at 10 ml/min for 40 minutes under open pressure, the coloring matter was extracted for about 2 hours by allowing an aqueous solution of sodium hydroxide at 0.01 mole/liter concentration to flow at a flow rate of 10 ml/min under 2 MPa. To thus-obtained aqueous solution of the coloring matter in dark blue, a small volume of a 3.5% by mass solution of hydrochloric acid was added to adjust the pH to 3 or lower, and the coloring matter component was precipitated to obtain the coloring matter in a solid form by filtration. As a main component of coloring matter produced by *Chlorociboria aeruginosa,* xylindein is known, but the coloring matter used in the present invention may contain coloring matters other than this.

### Example 1

### (1) Preparation of test culture medium

Solution A: 165 g of NH₄NO₃, 190 g of KNO₃, 17 g of KH₂PO₄, 620 mg of H₃BO₃, 2.23 g of MnSO₄.4H₂O, 860 mg of ZnSO₄.4H₂O, 83 mg of Kl, 25 mg of Na₂·MoO₄·2H₂O, 2.5 mg of CuSO₄.5H₂O and 2.5 mg of CoCl₂.6H₂O were successively dissolved in 1.5 liters of distilled water, and then, the total volume was adjusted finally to 2 liters by adding distilled water.

Solution B: 44 g of CaCl₂.2H₂O was dissolved in distilled water and the total volume was adjusted to 1 liter.

Solution C: 37 g of MgSO₄·7H₂O was dissolved in distilled water and the total volume was adjusted to 1 liter.

Solution D: 2.78 g of FeSO₄·7H₂O and 3.73 g of disodium ethylenediaminetetraacetate were dissolved in distilled water and the total volume was adjusted to 1 liter.

After 20 ml of the solution A, 10 ml of the solution B, 10 ml of the solution C, 10 ml of the solution D, 30 g of sucrose, and 500 ml of distilled water were mixed, the total volume was adjusted to 1 liter by adding distilled water, pH was adjusted to 5.7 to 5.8, and 10 g of agar was added to prepare a test medium.

### (2) Germination of dicotyledonous plant seeds

The test culture medium sterilized for 20 minutes at 120 °C in an autoclave was taken out in 50 ml portions and each poured into plastic culture pots (product of Kirin Brewery Co., LTD., tradename "Agripot") provided with vermiculite. Each portion was allowed to contain the coloring matter at concentrations of 5 × 10⁻⁵ g/l, 2.5 × 10⁻⁴ g/l, 5 × 10⁻⁴ g/l, 2.5 × 10⁻³ g/l, 5 × 10⁻³ g/l, 1 × 10⁻² g/l, and 2 × 10⁻² g/l, respectively.

Subsequently, 14 seeds of daikon radish sprout (treated with a 0.1 % by mass solution of mercury chloride (II) for 1 minute, followed by washing with running water and sterile water) were seeded in every culture pot in a clean bench, the culture pots were wrapped with aluminum foil, and the seeds were germinated in an environment control apparatus by keeping the temperature at 22 °C. Immediately after the germination, the aluminum foil was removed, and a cycle of exposure to light by using a fluorescent lamp for plant cultivation for 16 hours and subsequent standing in the dark for 8 hours was repeated. The cultivation was continued for 14 days.

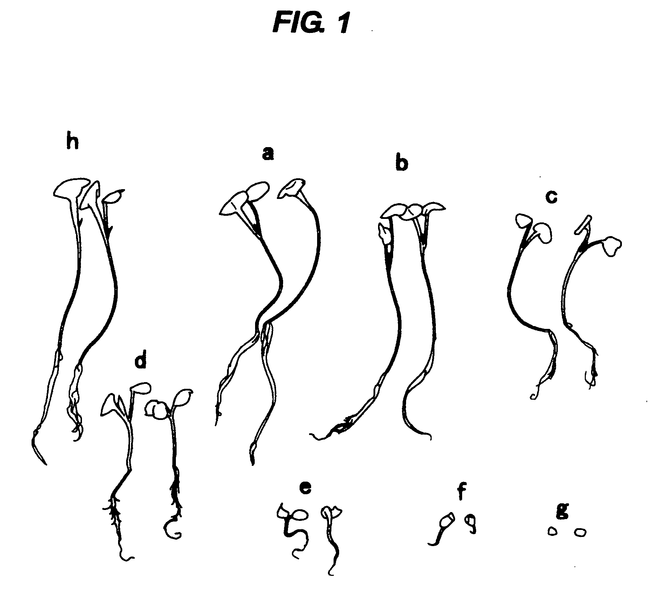

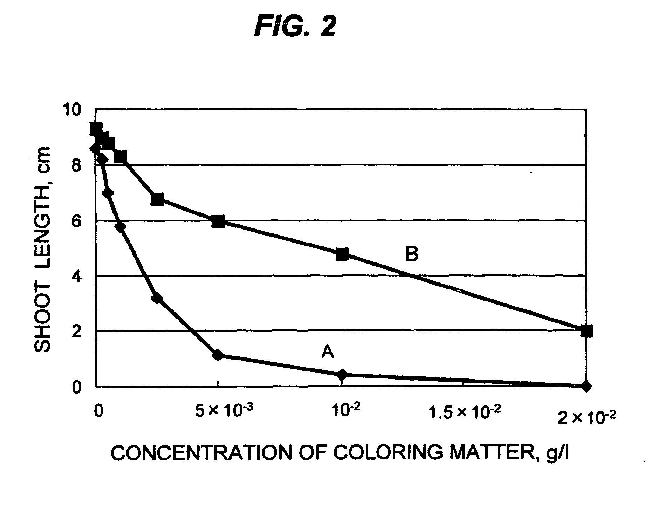

Germination states at each concentration are shown in Figure 1 in comparison with that of a control that did not contain the coloring matter. In the figure, a, b, c, d, e, f, and g represent germination states at the coloring matter concentrations of 5 × 10⁻⁵ g/l, 2.5 × 10⁻⁴ g/l, 5 × 10⁻⁴ g/l, 2.5 × 10⁻³ g/l, 5 × 10⁻³ g/l, 1 × 10⁻² g/l, and 2 × 10⁻² g/l, respectively, and h represents a germination state of the control. Further, a graph showing a relation between the shoot lengths (cm) averaged for the 14 seeds and the concentrations (g/l) of the coloring matter is shown as A in Figure 2.

### Example 2

Vermiculite was put in the same kind of culture pots as used in Example 1, and the test culture medium prepared in (1) of Example 1 was treated for sterilization as in Example 1 and then taken out in 80 ml portions to which the coloring matter was added at concentrations of 5 × 10⁻⁵ g/l, 2.5 × 10⁻⁴ g/l, 5 × 10⁻⁴ g/l, 2.5 × 10⁻³ g/l, 5 × 10⁻³ g/l, 1 × 10⁻² g/l, and 2 × 10⁻² g/l, respectively.

Then, 7 rice seeds per every culture pot were seeded in these culture pots and cultivated as in Example 1.

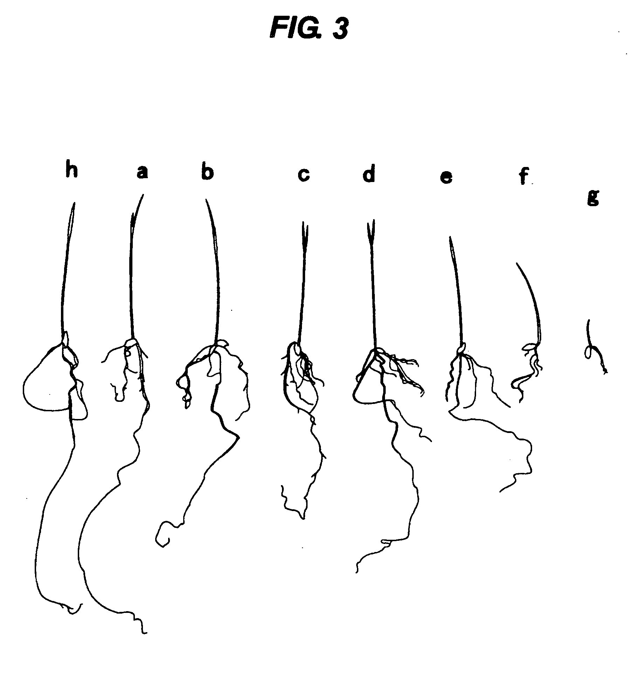

Germination states thus obtained at each concentration are shown in Figure 3 in comparison with that of a control that did not contain the coloring matter. In the figure, a, b, c, d, e, f, and g represent germination states at the coloring matter concentrations of 5 × 10⁻⁵ g/l, 2.5 × 10⁻⁴ g/l, 5 × 10⁻⁴ g/l, 2.5 × 10⁻³ g/l, 5 × 10⁻³ g/l, 1 × 10⁻² g/l, and 2 × 10⁻² g/l, respectively, and h represents a germination state of the control.

Further, a graph showing a relation between the shoot lengths (cm) averaged for the 7 seeds and the concentrations of the coloring matter is shown as B in Figure 2.

### Example 3

After 30 daikon radish seeds were fully swollen, a 2 × 10⁻² g/l aqueous solution of the coloring matter obtained in Reference Example 1 was sprayed on them. These seeds were placed on absorbent cotton in a Petri dish, and germination was observed in the environment control apparatus under exposure to light. However, germination was not observed even after six months elapsed.

### Example 4

After spraying the 2 × 10⁻² g/l aqueous solution of the coloring matter obtained in Reference Example 1 over 30 daikon radish seeds, these seeds were dried. After one year passed, these were placed on absorbent cotton wetted with water in a Petri dish, and germination was observed in the environment control apparatus under exposure to light. However, germination was not observed even after six months elapsed.

### Comparative Example 1

Thirty daikon radish seeds that were sprayed with the 2 × 10⁻² g/l aqueous solution of the coloring matter obtained in Reference Example 1 followed by drying were exposed to water for 2 hours to remove the coloring matter and subsequently placed on absorbent cotton wetted with water in a Petri dish, and when germination was observed in the environment control apparatus under exposure to light, germination was detected for all of the 30 daikon radish seeds.

Thus, even daikon radish seeds once treated with the coloring matter for germination inhibition can be germinated similarly to untreated daikon radish seeds by removing the coloring matter.

### Example 5

After 30 broccoli seeds were fully swollen, the 2 × 10⁻² g/l aqueous solution of the coloring matter obtained in Reference Example 1 was sprayed on them. These seeds were placed on absorbent cotton in a Petri dish, and germination was observed in the environment control apparatus under exposure to light. However, germination was not observed even after six months elapsed.

### Example 6

The 2 × 10⁻² g/l aqueous solution of the coloring matter obtained in Reference Example 1 was sprayed on 30 broccoli seeds, followed by drying. After one year passed, these seeds were placed on absorbent cotton wetted with water in a Petri dish and exposed to light by using the environment control apparatus, and germination was observed. However, germination was not observed even after six months elapsed.

### Comparative Example 2

The 2 × 10⁻² g/l aqueous solution of the coloring matter obtained in Reference Example 1 was sprayed on 30 broccoli seeds, followed by drying. When these seeds were exposed to running water for 2 hours to wash away the coloring matter, then placed on absorbent cotton wetted with water in a Petri dish, and exposed to light in the environment control apparatus, germination was observed for all of the 30 seeds after one week elapsed.

Thus, even broccoli seeds once treated with the coloring matter for germination inhibition can be germinated similarly to untreated broccoli seeds by removing the coloring matter.

### Example 7

After 20 broad bean seeds were immersed in water and fully swollen, the 2 × 10⁻² g/l aqueous solution of the coloring matter obtained in Reference Example 1 was sprayed on them. These seeds were placed on absorbent cotton in a Petri dish and exposed to light in the environment control apparatus, and germination was observed. However, germination was not detected even after six months elapsed.

### Example 8

The 2 × 10⁻² g/l aqueous solution of the coloring matter obtained in Reference Example 1 was sprayed on 20 swollen broad bean seeds, and they were dried and stored. After one year passed, these seeds were placed on absorbent cotton wetted with water in a Petri dish and exposed to light in the environment control apparatus, and germination was observed. However, germination was not detected even after six months elapsed.

### Comparative Example 3

The 2 × 10⁻² g/l aqueous solution of the coloring matter obtained in Reference Example 1 was sprayed on 20 broad bean seeds, followed by drying. These seeds were exposed to running water for 2 hours to wash away the coloring matter and then placed on absorbent cotton wetted with water in a Petri dish. When germination was observed under exposure to light in the environment control apparatus, germination was detected for all of the seeds in one week.

Thus, even broad bean seeds once treated with the coloring matter for germination inhibition can be germinated similarly to untreated broad bean seeds by removing the coloring matter.

### Example 9

After 20 corn seeds were immersed in water and fully swollen, the 2 × 10⁻² g/l aqueous solution of the coloring matter obtained in Reference Example 1 was sprayed on them. These seeds were placed on absorbent cotton in a Petri dish and exposed to light in the environment control apparatus, and germination was observed. However, germination was not detected even after six months elapsed.

### Example 10

The 2 × 10⁻² g/l aqueous solution of the coloring matter obtained in Reference Example 1 was sprayed on 20 swollen corn seeds, and then they were dried and stored. After one year passed, these seeds were placed on absorbent cotton wetted with water in a Petri dish and exposed to light in the environment control apparatus, and germination was observed. However, germination was not detected even after six months elapsed.

### Comparative Example 4

The 2 × 10⁻² g/l aqueous solution of the coloring matter obtained in Reference Example 1 was sprayed on 20 swollen corn seeds, followed by drying. These seeds were then exposed to running water for 2 hours to wash away the coloring matter and placed on absorbent cotton wetted with water in a Petri dish. When germination was observed under exposure to light in the environment control apparatus, germination was detected for all of the seeds in one week.

Thus, even corn seeds once treated with the coloring matter for germination inhibition can be germinated similarly to untreated corn seeds by removing the coloring matter.

### Example 11

After 30 watermelon seeds were immersed in water and fully swollen, the 2 × 10⁻² g/l aqueous solution of the coloring matter obtained in Reference Example 1 was sprayed on them and then placed on absorbent cotton wetted with water in a Petri dish, and germination was observed under exposure to light in the environment control apparatus. However, germination was not detected even after six months elapsed.

### Example 12

The 2 × 10⁻² g/l aqueous solution of the coloring matter obtained in Reference Example 1 was sprayed over 30 watermelon seeds, and then they were dried and stored. After one year passed, these seeds were placed on absorbent cotton wetted with water in a Petri dish, and germination was observed under exposure to light in the environment control apparatus. However, germination was not detected even after six months elapsed.

### Comparative Example 5

The 2 × 10⁻² g/l aqueous solution of the coloring matter obtained in Reference Example 1 was sprayed on 30 watermelon seeds, followed by drying. These seeds from which the coloring matter had been washed away by exposing to running water for 2 hours were placed on absorbent cotton wetted with water in a Petri dish. When germination was observed under exposure to light in the environment control apparatus, germination was detected for all of the seeds in one month.

Thus, even watermelon seeds once treated with the coloring matter for germination inhibition can be germinated similarly to untreated watermelon seeds by removing the coloring matter.

### Example 13

The 2 × 10⁻² g/l aqueous solution of the coloring matter obtained in Reference Example 1 was sprayed on 20 chestnuts. Then these chestnuts were dried and placed on absorbent cotton wetted with water in a Petri dish, and germination was observed under exposure to light in the environment control apparatus. However, germination was not detected at all even after six months elapsed.

### Example 14

The 2 × 10⁻² g/l aqueous solution of the coloring matter obtained in Reference Example 1 was sprayed on 20 chestnuts, and then they were dried and stored. After one year passed, these chestnuts were placed on absorbent cotton wetted with water in a Petri dish, and germination was observed under exposure to light in the environment control apparatus. However, germination was not detected even after six months elapsed.

### Comparative Example 6

The 2 × 10⁻² g/l aqueous solution of the coloring matter obtained in Reference Example 1 was sprayed on 30 chestnuts, followed by drying. These chestnuts from which the coloring matter had been washed away by exposing to running water for 2 hours were placed on absorbent cotton wetted with water in a Petri dish. When germination was observed under exposure to light in the environment control apparatus, all of the chestnuts germinated in one month.

Thus, even chestnuts once treated with the coloring matter for germination inhibition can be germinated similarly to untreated chestnuts by removing the coloring matter.

### Example 15

One potato was cut to prepare 10 sample slices, and each slice was uniformly sprayed with the 2 × 10⁻² g/l aqueous solution of the coloring matter obtained in Reference Example 1. After drying, these slices were placed on absorbent cotton wetted with water in a Petri dish, and germination was observed under exposure to light in the environment control apparatus. However, germination was not detected at all even after six months elapsed.

### Example 16

One potato was cut to prepare 10 sample slices, and each slice was sprayed with the 2 × 10⁻² g/l aqueous solution of the coloring matter obtained in Reference Example 1, then dried and stored. After six months passed, these slices were placed on absorbent cotton wetted with water in a Petri dish, and germination was observed under exposure to light in the environment control apparatus. However, germination was not detected even after six months elapsed.

### Comparative Example 7

The 2 × 10⁻² g/l aqueous solution of the coloring matter obtained in Reference Example 1 was sprayed on 10 sample slices prepared by cutting one potato, followed by drying. Subsequently, these sample slices from which the coloring matter had been washed away by exposing to running water for 2 hours were placed on absorbent cotton wetted with water in a Petri dish. When germination was observed under exposure to light in environment control apparatus, all of the sample slices germinated in one month.

Thus, even potato once treated with the coloring matter for germination inhibition can be germinated similarly to untreated potato by removing the coloring matter.

### Example 17

Lotus root was harvested in winter and stored in wetted sawdust of rotten wood materials overgrown with *Chlorociboria aeruginosa,* and germination was observed. However, germination was not detected even after one year elapsed.

### Example 18

Bamboo shoot was harvested in spring and stored as it was in wetted sawdust of rotten wood materials overgrown with *Chlorociboria aeruginosa,* and germination was observed. However, germination was not detected at all even after one year elapsed, and even when the bamboo shoot was cut with a knife, the section of the bamboo shoot remained as fresh as it had been.

### Example 19

Ten Japanese black pines for bonsai tree (the total mass of the plant body; ca. 1 kg each) were divided into group A and group B, each with five trees. One each of the Japanese black pines of the group A was planted into each of five pots that were filled with 5 kg of sawdust of rotten materials overgrown with *Chlorociboria aeruginosa* and 20 kg of a common field soil, and one each of the Japanese black pines of the group B was planted into each of five pots that were filled with 25 kg of the common field soil without putting the sawdust of rotten materials overgrown with *Chlorociboria aeruginosa.* The growth of the Japanese black pines was observed under exposure to sunlight outdoors under natural environment.

As the result, the Japanese black pines in the group B rapidly increased the masses of their plant bodies, and an average plant body mass of one pine became about 5 kg after three years. At the butt, weeds of monocotyledonous plants such as Japanese pampas grass and of dicotyledonous plants such as shepherd's purse came to grow in abundance. In contrast, neither did the Japanese black pines in the group A grow over 1.3 kg nor were weeds of monocotyledonous plants or dicotyledonous plants observed at all.

### Example 20

Ten Japanese black pines for bonsai tree (the total mass of the plant body; ca. 1 kg each) and ten oleanders (the total mass of the plant body; ca. 1 kg each) were prepared, and five Japanese black pines of gymnospermous plant and five oleanders of dicotyledonous plant were defined as group (A). One each of both plants were planted together in five pots respectively that were filled with 5 kg of the sawdust of rotten materials overgrown with *Chlorociboria aeruginosa* and 20 kg of the common field soil, and their growth was observed under exposure to sunlight.

On the other hand, the remaining five Japanese black pines of gymnospermous plant and five oleanders of dicotyledonous plant were defined as group (B). One each of both plants were planted together in five pots respectively that were filled with 25 kg of the common field soil without putting the sawdust of rotten materials overgrown with *Chlorociboria aeruginosa,* and their growth was observed under exposure to sunlight.

As the result, the mass of the Japanese black pines and the oleanders in the group B increased; an average plant body mass of the former became about 3 kg and that of the latter also became about 4 kg after three years. At the root, weeds of monocotyledonous plants such as Japanese pampas grass and of dicotyledonous plants such as shepherd's purse came to grow in abundance as in Example 19. In contrast, as for the Japanese black pines and the oleanders in the group A, the former became about 1.3 kg and the latter became about 1.5 kg. Moreover, weeds of monocotyledonous plants or dicotyledonous plants were not observed at all.

### Example 21

In 1000 liters of water, 50 g of the coloring matter obtained in Reference Example 1 was dissolved to prepare a solution of the plant germination inhibitor for sprinkling.

Then, after weeding 200 m² of a building site in a residential district densely covered with weeds of monocotyledonous plants and dicotyledonous plants using a grass mower, the solution of the plant germination inhibitor was sprinkled over 100 m² of the site at a rate of 100 ml/m². After two months, shoot portions developing from the sections of weeds were collected and weighed. As the result, the mass of the shoot portions collected from the site where the solution of the plant germination inhibitor had been sprinkled was about 1/5 compared with that collected from the remaining 100 m² where the solution of the plant germination inhibitor had not been sprinkled.

### Example 22

Rice seedlings grown to 15 cm were transplanted in 200 m² referred to as A section in a paddy field and another 200 m² referred to as B section in the same paddy field using a riding type rice planter for three-row planting at the end of June. The same solution of the plant germination inhibitor as that used in Example 21 was sprinkled once a month over the 200 m² paddy field of the A section four times as a total down to September at a rate of 100 ml/m².

Thereafter, the rice grew well, and weeds such as *Echinochloa crus-galli, Scirpus juncoides,* and *Paspalum distichum* did not occur at all in the paddy field of the section A. On the other hand, the plant germination inhibitor was not sprinkled at all in the section B, and the rice grew well, but weeds such as *Echinochloa crus-galli, Scirpus juncoides,* and *Paspalum distichum* occurred in interspaces between individual rice plants in high abundance.

### Example 23

Wheat was seeded in 200 m² referred to as A section in a farm field and another 200 m² referred to as B section in the same farm field in two rows per levee at the end of November. A culture broth of *Chlorociboria aeruginosa* was sprinkled over the 200 m² farm field of the section A three times as a total down to March at a dry mycelium concentration of 1 g/l so as to avoid the rows of the wheat seedlings.

Thereafter, the wheat grew well, and weeds such as *Cyperus microiria, Ixeris chinensis* subsp. *strigosa, Vicia hirsuta, Vicia angustifolia,* and wild oat that usually occur in interspaces between wheat rows and between individual wheat plants did not occur at all in the farm field of the section A. On the other hand, the solution of the plant germination inhibitor was not sprinkled over the section B. Although the wheat grew well in this farm field, weeds such as *Cyperus microiria, Ixeris chinensis* subsp. *strigosa, Vicia hirsuta, Vicia angustifolia,* and wild oat occurred in high abundance in interspaces between wheat rows and between individual wheat plants.

### Example 24

Soybean seeds were seeded in 200 m² referred to as A section in a farm field and another 200 m² referred to as B section in the same farm field at the end of June. After the soybean seeds germinated and grew up to about 5 cm in two weeks, the same plant germination inhibitor as that used in Example 21 was sprinkled over the 200 m² farm field of the section A four times as a total down to September at a rate of 100 ml/m² so as to avoid the soybean seedlings.

Thereafter, the soybean grew well. In the section A, weeds such as *Centipeda minima,* I*xeris chinensis* subsp. *strigosa, Cyperus microiria, Miscanthus sinensis, Digitaria ciliaris,* and *Microstegium japonicum* did not develop at all. However, in the section B where the solution of the plant germination inhibitor was not sprinkled, weeds such as *Centipeda minima, Ixeris chinensis* subsp. *strigosa, Cyperus microiria, Miscanthus sinensis, Digitaria ciliaris,* and *Microstegium japonicum* occurred in high abundance in interspaces between individual soybean plants.

### Example 25

Adzuki bean seeds were seeded in 200 m² referred to as A section in a farm field and another 200 m² referred to as B section in the farm field at the end of June. After the soybean seeds germinated and grew up to about 5 cm in two weeks, the same solution of the plant germination inhibitor as that used in Example 21 was sprinkled over the 200 m² farm field of the section A four times as a total down to September at a rate of 100 ml/m² so as to avoid the soybean seedlings.

Thereafter, the adzuki bean grew well in the both sections. In respect of the adzuki bean in the section A, weeds such as *Centipeda minima, Ixeris chinensis* subsp. *strigosa, Cyperus microiria, Miscanthus sinensis, Digitaria ciliaris,* and *Microstegium japonicum* did not occur at all. However, in the section B where the solution of the plant germination inhibitor was not sprinkled, weeds such as *Centipeda minima, Ixeris chinensis* subsp. *strigosa, Cyperus microiria, Miscanthus sinensis, Digitaria ciliaris,* and *Microstegium japonicum* occurred in high abundance in interspaces between the adzuki bean plants.

### Example 26

Among 10 sheets of sod of nursery lawngrass with a size of 40 cm × 40 cm, five sheets of the sod of nursery lawngrass were referred to as Group A, and the remaining five sheets of the sod of nursery lawngrass were referred to as group B. Thirty seeds of dandelion and 30 seeds of *Miscanthus sinensis* were laid on each sheet of the nursery lawngrass, which was placed on the soil of a farm field. The group A was sprinkled with the same solution of the plant germination inhibitor as that used in Example 21 once a week at a rate of 100 ml/m² and watered everyday, and the growth of the lawngrass, germination of the seeds of dandelion, germination of the seeds of *Miscanthus sinensis,* and their growth were observed. For the group B, the solution of the plant germination inhibitor was not sprinkled but watered everyday, and the growth of the lawngrass, germination of the seeds of dandelion, germination of the seeds of *Miscanthus sinensis,* and their growth were observed.

After one month, the growth of the lawngrass, germination of the seeds of dandelion, and germination of the seeds of *Miscanthus sinensis* were not observed in the group A. On the other hand, in the group B, the lawngrass grew to show high growth activity of developing new leaves, where long ones extended as long as approximately 50 cm from the edges of the lawngrass bed of 40 cm × 40 cm with an average of 10 leaves per sheet. The seeds of dandelion and the seeds of *Miscanthus sinensis* in the B group germinated and grew large.

### Example 27

Lawngrass in 20 m² representing part of a lawn densely grown with lawngrass was cut with a lawn mower. Then, 100 seeds of dandelion and 100 seeds of *Miscanthus sinensis* were seeded in 10m² of the 20 m² lawn, and the same solution of the plant germination inhibitor as that used in Example 21 was sprinkled every two weeks at a rate of 100 ml/m². On the other hand, 100 seeds of dandelion and 100 seeds of *Miscanthus sinensis* were seeded in the remaining 10 m² in a similar manner and left without sprinkling the solution of the plant germination inhibitor.

After two months, germination and growth of the seeds of dandelion and *Miscanthus sinensis* were not observed in the former, whereas in the latter, about 80 of the seeds of dandelion germinated and grew, and about 70 of the seeds of *Miscanthus sinensis* also germinated and grew. When these were harvested using a grass cutter and a lawn mower, the total mass of plant bodies of the former was 1/10 and significantly less compared with that of the latter.

### Reference Example 2

Forty *Oryzias latipes* var. (20 males and 20 females) were divided into two groups (each group: 10 males and 10 females). One group was grown in an aqueous solution of the coloring matter xylindein (1 × 10⁻² g/l) and the other was grown in water in the presence of wood on which mycelia of *Chlorociboria aeruginosa* developed and which was rotten and stained blue. Even after one week passed, no anomaly was observed in the *Oryzias latipes* var.

From this result, it is apparent that the coloring matter produced by *Chlorociboria aeruginosa* does no harm to the living organism at its concentrations used.

### Industrial Applicability

The plant germination inhibitor of the present invention allows storage of seeds and rootstalks for over a long time period by suppressing germination of plants and inhibiting formation of rootstalk tissues. Further, the plant germination inhibitor of the present invention makes it possible to eliminate weeding by selectively inhibiting germination of weeds other than a cultivated crop in a symbiotic area of two or more kinds of plants.

Accordingly, the plant germination inhibitor of the present invention is useful for storage of seeds and rootstalks of vegetables and fruits, prevention of development of weeds growing in a cultivated area of a crop for cultivation, pavement, garden, and vacant lot, and the like.

## Claims

1. A plant germination inhibitor of which the effective ingredient is the coloring matter produced in a woody part by a fungus belonging to the genus *Chlorociboria* or the coloring matter contained in the fungus body of the fungus belonging to the genus *Chlorociboria.*

2. A method for controlling formation of tissues of a plant **characterized in that** the plant germination inhibitor described in Claim 1 is distributed, during the germinating period of the plant, over the area where the plant grows so as to suppress germination of the plant and to inhibit formation of the rootstalk tissues.

3. A method for plant cultivation **characterized in that** the plant germination inhibitor described in Claim 1 is distributed over a symbiotic area of at least two kinds of plants so as to selectively inhibit formation of rootstalk tissues of the plants other than the desired cultivated plants by utilizing the difference in the germinating conditions among the respective plants.

4. The method for plant cultivation described in Claim 3 wherein the plants include at least two kinds selected from monocotyledonous plants, dicotyledonous plants and gymnospermous plants.

5. The method for plant cultivation described in Claim 3 wherein the symbiotic area is a symbiotic area of a monocotyledonous plant as the cultivated crop and a monocotyledonous plant or a dicotyledonous plant, or both, to be a weed.

6. The method for plant cultivation described in Claim 3 wherein the symbiotic area is a symbiotic area of a dicotyledonous plant as the cultivated plant and a monocotyledonous plant or a dicotyledonous plant, or both, to be a weed.

7. A method for lawn management **characterized in that** the plant germination inhibitor described in Claim 1 is distributed over a lawngrass growing area so as to prevent excessive growth of the lawngrasses along with prevention of occurrence of weeds other than the lawngrasses.
